# EUROPEAN PATENT SPECIFICATION

(11) **EP 0 345 355 B1**
(45) Date of publication and mention of the grant of the patent: **10.05.1995**
(21) Application number: 88909826.5
(22) Date of filing: 11.11.1988
(51) Int. Cl.: G05B 19/4093

(54) **INTERACTIVE NC APPARATUS**
INTERAKTIVE NUMERISCHE STEUERUNG
DISPOSITIF INTERACTIF DE COMMANDE NUMERIQUE

(30) Priority: 27.11.1987 JP 299499/87
(43) Date of publication of application: 13.12.1989
(73) Proprietor: FANUC LTD., Minamitsuru-gun, Yamanashi 401-05 (JP)
(72) Inventor: MIYATA, Mitsuto, Tokyo 192 (JP); MATSUMURA, Teruyuki, Tokyo 192-03 (JP)
(74) Representative: Billington, Lawrence Emlyn
(86) International application number: JP8801138
(87) International publication number: WO8905006

(56) References cited:
- EP-A- 0 166 783
- GB-A- 2 155 661
- JP-A-59 140 513
- JP-A-60 126 710

## Description

This invention relates to a conversational-type NC apparatus in which numerical control data is entered based on display data to automatically create an NC program.

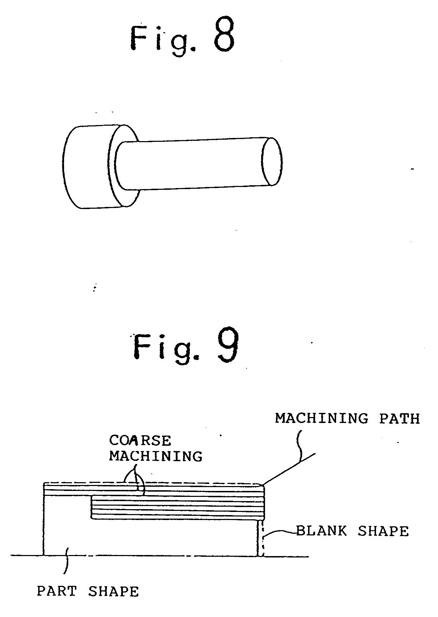

When a round bar-shaped blank is to be machined into a stepped bar-shaped configuration having two portions with different diameters, as shown in Fig. 8, cutting is performed by feeding a tool in the axial or diametric direction while the workpiece is being rotated.

In cutting the stepped bar shown in Fig. 8, it is necessary to perform coarse machining several times and final finishing machining, as depicted in Fig. 9. In order to decide the machined diameter, it is necessary to determine the amount of coarse machining cut-in, the finishing machining allowance and the feed rate of the tool from the capability of the machine tool and the material constituting the blank. Technology has been developed for performing such machining programming by a conversational-type NC apparatus.

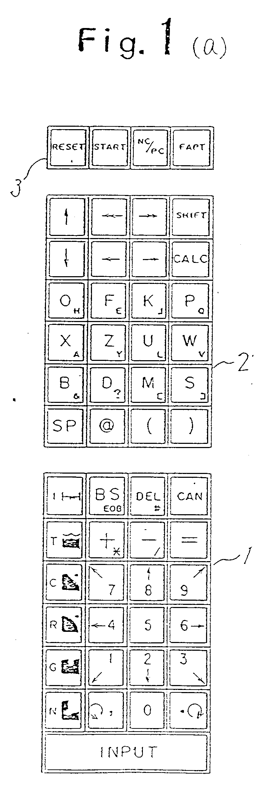

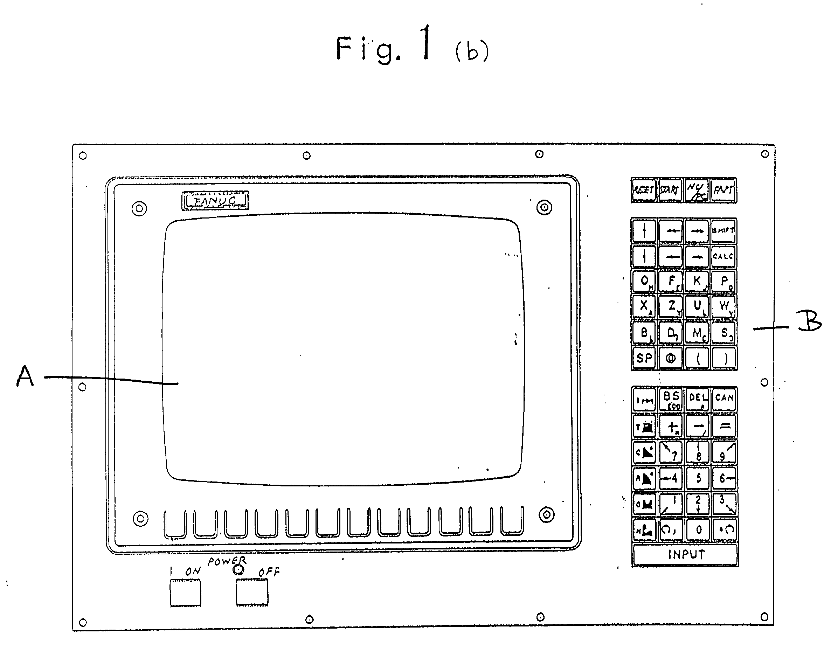

The input unit of this apparatus is configured as a CRT/MDI panel composed of a display section A which displays the details of questions and a keyboard section B having figure input keys and numeric input keys, as shown in Fig. 1(b). The keyboard section B is constituted by key groups 1, 2 comprising alphabetic and numeric keys, and a key group 3 comprising an NC start key (START), an NC/PC changeover key (NC/PC), and a FAPT selection key (FAPT), as illustrated in enlarged form in Fig. 1(a). The input unit is provided with a controller using a microcomputer for performing various arithmetic control operations.

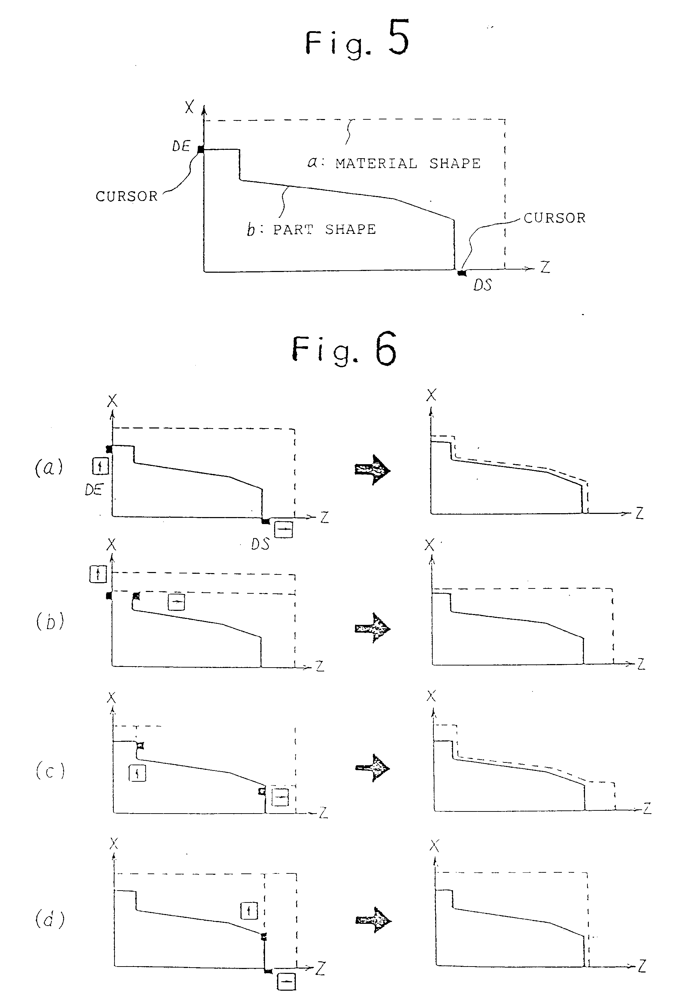

Fig. 5 illustrates an example in which a conversational-type NC apparatus is employed. Here the shape a of a material and the shape b of a workpiece after machining are displayed on a screen in response to instructions from the keyboard, and programming for machining processing is performed by using arrow keys to designate the direction of movement of a cursor indicating a starting point DS of a machining area and of a cursor indicating an end point DE of the machining area.

Figs. 6(a) through (d) illustrate various patterns for machining area designation. By using the arrow keys to designate the starting point DS and end point DE of the cursors as well as the directions of movement thereof, as shown on the left side of each of the Figures (a) through (d), the shape after machining is displayed, as depicted on the right side of each Figure.

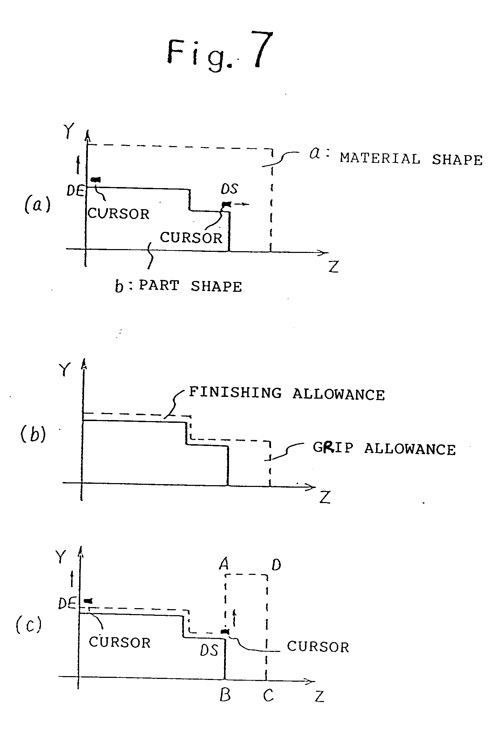

When the material shape a and part shape b are displayed and the cursor starting point DS, end point DE and directions of movement are designated by the figure input keys and the key "→" of the keyboard B, respectively, as illustrated in Fig. 7(a), the shape after coarse machining is displayed, with the finishing allowance and latch chuck gripping allowance remaining, as shown in (b) of Fig. 7.

However, if the "↑" key is operated when it is intended to designate the direction of movement of the cursor starting point DS by the key "→", as shown in Fig. 7(c), the area ABCD will remain as an unmachined area. Consequently, the operator must re-designate the machining area. Thus, when a keying error is made in the course of operation so that it becomes necessary to subsequently correct the error, the processing becomes more complicated.

The present invention has been devised in order to solve the foregoing problems and its object is to provide a conversational-type NC apparatus, based on that disclosed in EP-A-0 166 783, which is so adapted that it is possible to readily check whether a designation made by a key input in programming is the same as what is intended.

In accordance with the invention, there is provided a conversational-type NC apparatus having a display unit for displaying a material shape, a post-machining part shape, cursors for designating a machining starting point and machining end point of the material shape displayed on the display unit and a machining area which is determined on the basis of said material shape and the directions of movement of said cursors as designated by the operator, and a keyboard allowing an operator to designate directions of movement of the cursors; wherein an NC program is created automatically upon entering numerical control data based on display data displayed on said display unit;
the conversational-type NC apparatus being characterised in that it is adapted to enable an operator to check his inputs in order to avoid an incorrect post-maching part-shape being defined, by displaying said machining area before displaying said post-machining part shape, thus enabling the operator to check the displayed machining area, and the designated directions of movement of said cursors, before a resultant post-machining part shape is defined.

Thus, the conversational-type NC apparatus of the present invention is such that when directions of movement of the cursors are designated, the machining area is displayed before the decided part shape that will result following machining, thereby enabling the machining area to be checked by the operator. In other words, in accordance with the invention, since the machining area of the material is displayed before the post-machining part shape when the directions of movement of the cursors are designated, the presence of an input error can be ascertained at this stage and the correct machining can be designated. This improves the operability of the conversational-type NC apparatus.

### Brief Description of the Drawings

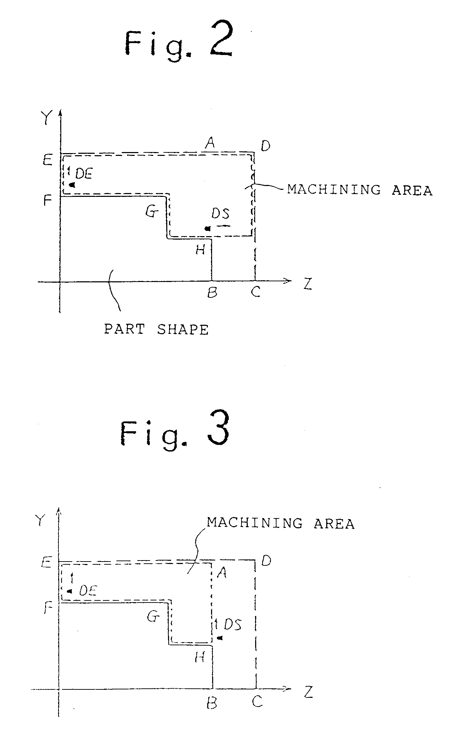

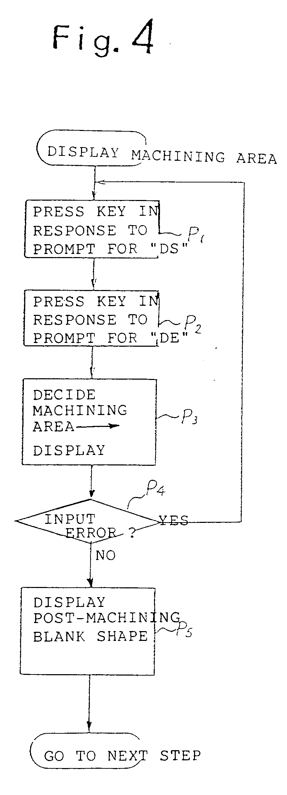

Fig. 1 is an external view of an embodiment of conversational-type NC apparatus according to the present invention, Figs. 2 and 3 are views for describing the operation of an embodiment of the invention, Fig. 4 is a flowchart of an embodiment of the present invention, Fig. 5, Figs. 6(a) through (d), Figs. 7(a) through 7(c), and Figs. 8 and 9 are views for describing the conventional apparatus.

An embodiment of the invention will now be described in detail with reference to the drawings.

Figs. 2 and 3 are explanatory views illustrating an example of a display according to the present invention. When cursor starting and end points DS, DE and the directions of movement thereof are designated by arrow keys, as shown in Fig. 2, a machining area itself, namely DEFGHI in this example, and not the post-machining shape as in the prior art, is displayed by lines of a type different from those indicating the material shape and part shape. This machining area is decided, and the display thereof designated, by a controller such as a CPU incorporated in the input unit.

If the direction of movement of the cursor starting point DS is mistakenly set as "↑", as illustrated in Fig. 3, the machining area AEFGH is displayed. As a result, the operator immediately notices that the wrong arrow key has been pressed and is capable of correctly resetting the direction of movement at the cursor starting point DS as "→", in response to which the normal machining area shown in Fig. 2 is displayed.

Fig. 4 is a flowchart illustrating the processing procedure of the present invention. This flowchart will be described next.

The program for display of the machining area screen is started. In response to a prompt regarding the direction of movement of the cursor starting point "DS", an arrow key is pressed at step P1. In response to a prompt regarding the direction of movement of the cursor end point "DE", an arrow key is pressed at step P2. Next, the machining area is decided and displayed on the display unit at step P3, and it is judged at step P4, based on the displayed machining area, whether an input error has been made. If an input error is judged to have been made, the processing from step P1 onward is repeated. If there is no input error, display of the post-machining shape of the blank is designated at step P5.

Thus, the present invention is characterized in that the machining area is displayed at a stage prior to that at which the post-machining shape of the blank is displayed by the display designation made in the prior art. Here the lines indicating the machining area
(1) employ line segments other than the solid lines indicating the part shape, e.g., broken lines or one-dot chain lines, or
(2) are contour lines of a color different from those of the contour lines of the material shape and part shape in a case where a color CRT is used. This makes it possible for the operator to clearly distinguish these lines.

### Industrial Applicability

Applying the conversational-type NC apparatus of the present invention as the conversational-type NC apparatus for a lathe will make it possible to facilitate the programming thereof.

## Claims

1. A conversational-type NC apparatus having
a display unit for displaying a material shape (a), a post-machining part shape (b), cursors for designating a machining starting point (DS) and machining end point (DE) of the material shape displayed on the display unit and a machining area which is determined on the basis of said material shape and the directions of movement of said cursors as designated by the operator; and
a keyboard allowing an operator to designate directions of movement of said cursors;
wherein an NC program is created automatically upon entering numerical control data based on display data displayed on said display unit;
the conversational-type NC apparatus being characterised in that it is adapted to enable an operator to check his inputs in order to avoid an incorrect post-machining part-shape being defined, by displaying said machining area before displaying said post-machining part shape, thus enabling the operator to check the displayed machining area, and the designated directions of movement of said cursors, before a resultant post-machining part shape is defined.

2. A conversational-type NC apparatus according to claim 1, which is adapted to display the decided machining area as line segments other than solid lines indicating the post-machining part shape.

3. A conversational-type NC apparatus according to claim 1, which is adapted to display the decided maching area as contour lines of a colour different from those of contour lines of the material shape and the post-machining part shape.

## Patentansprüche

1. Dialogfähige NC-Einrichtung mit
einer Anzeigeeinheit zum Anzeigen einer Materialform (a), einer Teilform (b) nach einer Bearbeitung, von Positionsanzeigern zum Kennzeichnen eines Bearbeitungs-Beginnpunkts (DS) und eines Bearbeitungs-Endepunkts (DE) der Materialform, die auf dem Bildschirm der Anzeigeeinheit angezeigt ist, und eines Bearbeitungsbereichs, der auf der Grundlage der Materialform und der Richtungen der Bewegung der Positionsanzeiger, wie sie durch die Bedienungsperson bestimmt sind, festgelegt ist, und
einer Tastatur, die es der Bedienungsperson gestattet, die Richtungen der Bewegung der Positionsanzeiger zu bestimmen,
wobei ein NC-Programm selbsttätig auf das Eingeben von numerischen Steuerdaten hin auf der Grundlage von Anzeigedaten, die auf dem Bildschirm der Anzeigeeinheit angezeigt sind, erzeugt wird,
welche dialogfähige NC-Einrichtung dadurch **gekennzeichnet** ist, daß sie dazu bestimmt ist, eine Bedienungsperson in die Lage zu versetzen, ihre Eingaben zu prüfen, um durch Anzeigen des Bearbeitungsbereichs vor dem Anzeigen der Teilform nach einer Bearbeitung zu vermeiden, daß eine fehlerhafte Teilform nach der Bearbeitung bestimmt ist, um auf diese Weise die Bedienungsperson in die Lage zu versetzen, den angezeigten Bearbeitungsbereich und die bestimmten Richtungen der Bewegung der Positionsanzeiger zu prüfen, bevor eine sich nach der Bearbeitung ergebende Teilform bestimmt ist.

2. Dialogfähige NC-Einrichtung nach Anspruch 1, die dazu bestimmt ist, den bestimmten Bearbeitungsbereich als Liniensegmente anzuzeigen, die keine durchgezogenen Linien sind, welche die Teilform nach der Bearbeitung anzeigen.

3. Dialogfähige NC-Einrichtung nach Anspruch 1, die dazu bestimmt ist, den bestimmten Bearbeitungsbereich als Umrißlinien in einer Farbe anzuzeigen, die unterschiedlich von den Farben der Umrißlinien der Materialform und der Teilform nach der Bearbeitung ist.

## Revendications

1. Un appareil à commande numérique de type interactif comprenant
une unité d'affichage pour l'affichage d'une forme de matériau (a), d'une forme de pièce après usinage (b), des curseurs pour la désignation d'un point de départ (DS) d'usinage et d'un point d'arrivée (DE) d'usinage de la forme de matériau affichée sur l'unité d'affichage, et d'une zone d'usinage qui est déterminée sur la base de ladite forme de matériau et des directions du mouvement desdits curseurs, comme désigné par l'opérateur ; et
un clavier permettant à un opérateur de désigner des directions de mouvement desdits curseurs ;
dans lequel un programme de commande numérique est créé automatiquement au moment de l'entrée de données de commande numérique basées sur des données d'affichage affichées sur ladite unité d'affichage ;
l'appareil à commande numérique de type interactif étant caractérisé en ce qu'il est prévu pour permettre à un opérateur de contrôler ses entrées afin d'éviter une forme incorrecte de pièce après usinage d'être définie, en affichant ladite zone d'usinage avant l'affichage de ladite forme de pièce après usinage, en permettant ainsi à l'opérateur de vérifier la zone d'usinage affichée et les directions désignées de mouvement desdits curseurs, avant qu'une forme définitive de la pièce après usinage soit définie.

2. Un appareil à commande numérique de type interactif selon la revendication 1 qui est prévu pour afficher la zone d'usinage décidée en tant que segments de lignes autres que les gnes pleines fndiquant la forme de la pièce après usinage.

3. Un appareil à commande numérique de type interactif selon la revendication 1 qui est prévu pour afficher la zone d'usinage décidée en tant que lignes de contour d'une couleur différente de celle des lignes de contour de la forme du matériau et de la forme de la pièce après usinage.
